(19) Europäisches Patentamt
European Patent Office
Office européen des brevets

(11) EP 1 538 188 B1

(12) **EUROPÄISCHE PATENTSCHRIFT**

(45) Veröffentlichungstag und Bekanntmachung des Hinweises auf die Patenterteilung:
**25.04.2007 Patentblatt 2007/17**

(21) Anmeldenummer: **04105789.4**

(22) Anmeldetag: **16.11.2004**

(51) Int Cl.:
***C09J 7/00*** *(2006.01)* ***C09J 133/02*** *(2006.01)*
***C09J 133/04*** *(2006.01)* ***C09J 133/08*** *(2006.01)*
***C09J 133/10*** *(2006.01)*

# (54) Zweischichtige Haftklebemasse

Two-layered pressure sensitive adhesive

Masse auto-adhésive en deux couches

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **05.12.2003 DE 10357322**

(43) Veröffentlichungstag der Anmeldung:
**08.06.2005 Patentblatt 2005/23**

(73) Patentinhaber: **tesa AG**
**20253 Hamburg (DE)**

(72) Erfinder:
- **Husemann, Marc**
**22605, Hamburg (DE)**
- **Zöllner, Stephan**
**22043, Hamburg (DE)**

(56) Entgegenhaltungen:
**EP-A- 0 308 216**
**EP-A- 1 302 521**
**US-A- 2 889 038**
**US-A- 4 335 171**

EP 1 538 188 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine zweischichtige Haftklebemasse, Verfahren zu deren Herstellung sowie eine Verwendung einer derartigen Haftklebemasse.

Für industrielle Verklebungen werden sehr häufig Haftklebemassen in Form von Transferklebebändern eingesetzt. In der Regel werden Materialien gleicher Zusammensetzung miteinander verklebt. Für bestimmte Anwendungen kann es aber auch sein, dass sich die chemische Zusammensetzung der zu verklebenden Materialien unterscheidet. Einen bedeutenden Einfluss auf die Haftfähigkeit eines Materials hat die Oberflächenspannung. In der Regel lassen sich niederenergetische Oberflächen, wie z. B. Polyolefine, schlechter verkleben. Wenn man diese Materialen nun mit hochenergetischen Oberflächen verkleben möchte, so werden in der Regel doppelseitige Haftklebebänder eingesetzt, die aus einer Trägerschicht bestehen und mit zwei unterschiedlichen Haftklebemassen beschichtet sind.

Für die Verklebung besitzt die Trägerschicht aber keine Funktion. Es besteht somit der Bedarf für eine zweischichtige Haftkiebemasse, die diese Funktion des doppelseitigen Haftklebebandes in sich vereinigt, ohne dass eine Trägerschicht erforderlich ist.

Der Erfindung liegt daher die Aufgabe zugrunde, eine zweischichtige Haftkiebemasse anzugeben, die Verklebung von Materialien unterschiedlicher Zusammensetzung, insbesondere von Materialien mit unterschiedlichen energetischen Oberflächen ermöglicht. Darüber hinaus sollen ein Verfahren zur Herstellung einer solchen Haftklebemasse sowie eine Verwendung einer derartigen Haftklebemasse angegeben werden.

Diese Aufgabe wird durch die Merkmale der Ansprüche 1 und 7 bis 10 gelöst. Zweckmäßige Ausgestaltungen der Erfindungen ergeben sich aus den Merkmalen der Ansprüche 2 bis 6.

Nach Maßgabe der Erfindung ist eine zweischichtige Haftklebemasse vorgesehen, die eine unpolare Schicht und eine polare Schicht umfasst, wobei
die unpolare Schicht und die polare Schicht jeweils eine Polyacrylathaftklebemasse mit einer statischen Glasübergangstemperatur von höchstens + 15 °C umfassen und wobei
sich die Oberflächenenergie der unpolaren Schicht von der Oberflächenenergie der polaren Schicht um zumindest 5 mN/m unterscheidet.

Die Erfindung betrifft daher eine zweischichtige Haftklebemasse, die auf einer Seite polar ist und auf der anderen Seite unpolar ist. Überraschender Weise wurde gefunden, dass derartige zweischichtige Haftklebemassen die Aufgabe der vorliegenden Erfindung hervorragend erfüllen.

Zur Messung der Oberflächenenergien und Klebkräfte wird auf den Abschnitt "Testmethoden" verwiesen.

Zur Vereinfachung wird die unpolare Schicht auch als Schicht A, die polare Schicht auch als Schicht B bezeichnet.

In einer sehr bevorzugten Ausführungsform der erfindungsgemäßen Haftkiebemasse sind durch physikalische oder chemische Vorbehandlung der Schicht A oder B beide Schichten miteinander verbunden.

Zur Erzielung einer Glasübergangstemperatur $T_G$ der Polymere von höchstens 15 °C werden die Monomere der ersten und zweiten Monomerzusammensetzung sehr bevorzugt derart ausgesucht und die mengenmäßige Zusammensetzung der Monomermischung vorteilhaft derart gewählt, dass sich nach der Gleichung (G1) (in Analogie zur Fox-Gleichung (T.G. Fox, Bull. Am. Phys. Soc. 1 (1956) 123)) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur eines entsprechenden Homopolymers aus den jeweiligen Monomeren n in Kelvin.

Fig. 1 zeigt in schematische Darstellung einer erfindungsgemäßen Haftklebemasse, wobei Bezugszeichen 1 die polare Schicht (Schicht (B)) und Bezugszeichen 2 die unpolare Schicht (Schicht (A)) kennzeichnet.

Schicht A (unpolare Schicht)

Die Polyacrylathaftklebemasse der unpolaren Schicht umfasst vorzugsweise ein Polymer aus einer ersten Monomermischung, die in Bezug auf die erste Monomermischung

(a1) 58 bis 90 Gew.-% Acrylsäureester und/oder Methacrylsäureester der Formel $CH_2=C(R_1)(COOR_2)$, wobei $R_1$

H oder $CH_3$ darstellt und $R_2$ einen linearen oder verzweigten Alkylrest mit 1 bis 10 Kohlenstoffatomen darstellt;

(b1) 10 bis 40 Gew.-% Acrylsäureester und/oder Methacrylsäureester der Formel $CH_2=C(R_{1a})(COOR_{2a})$, wobei $R_{1a}$ H oder $CH_3$ darstellt und $R_{2a}$ einen linearen, cyclischen oder verzweigten Alkylrest mit 11 bis 30 Kohlenstoffatomen darstellt;

(c1) 0 bis 2 Gew-% Acrylsäure oder Methacrylsäure und

(d1) 0 bis 10 Gew.-% einer Vinylverbindung mit einer zur Vernetzung befähigten Gruppe, wobei die Vinylverbindung keine freien Carbonsäuregruppen oder Hydroxygruppen enthält; umfasst.

Vorzugsweise werden für die Monomere (a1) Acrylmomonere eingesetzt, die Acryl- und Methacrylsäureester mit Alkylgruppen, bestehend aus 4 bis 10 Kohlenstoffatomen, bevorzugt 4 bis 9 Kohlenstoffatomen, umfassen. Spezielle Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, oder isomere Verbindungen wie z. B. 2-Ethylhexylacrylat oder Isononylacrylat.

Vorzugsweise werden für die Monomere (b1) Acryl- oder Methacrylmonomere eingesetzt, die einen linearen, cyklischen oder verzweigten Alkylrest mit 11 bis 30 C-Atomen tragen, wie z. B. Laurylacrylat, Stearylacrylat, Behenylacrylat, Isobornylacrylat und Isobornylmethacrylate.

Bevorzugte Beispiele für die Komponente (d1) sind Itaconäureanhydrid, Glyceridylmethacrylat, Benzylacrylat, Benzylmethacrylat, Phenylacrylat, Benzoinacrylat, Phenylmethacrylat, t-Butylphenylacrylat, t-Butylphenylmethacrylat, Phenoxyethylacrylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Tetrahydrofurfurylacrylat, wobei diese Aufzählung nicht abschließend ist.

Schicht B (polare Schicht)

Die Polyacrylathaftklebemasse der polaren Schicht umfasst vorzugsweise ein Polymer aus einer zweiten Monomermischung, die in Bezug auf die zweite Monomermischung

(a2) 58 bis 97 Gew.-% Acrylsäureester und/oder Methacrylsäureester mit der Formel $CH_2=C(R_3)(CO0R_4)$, wobei $R_3$ H und/oder $CH_3$ darstellt und $R_4$ Alkylketten mit 1 bis 10 Kohlenstoffatomen darstellt;

(b2) 3 bis 12 Gew-% Acrylsäure oder Methacrylsäure; und

(c2) 0 bis 30 Gew.-% einer Vinylverbindung mit einer zur Vernetzung befähigten Gruppe;

umfasst.

Vorzugsweise werden für die Monomere (a2) Acrylmomonere eingesetzt, die Acryl- und Methacrylsäureester mit Alkylgruppen, bestehend aus 4 bis 10 Kohlenstoffatomen, bevorzugt 4 bis 9 Kohlenstoffatomen, umfassen. Spezielle Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat und deren verzweigten Isomere, wie z. B. 2-Ethylhexylacrylat. Weitere einzusetzende Verbindungsklassen, die ebenfalls in geringen Mengen unter (a2) hinzugesetzt werden können sind Methylmethacrylate oder Cyclohexylmethacrylate.

Vorzugsweise werden für die Monomere (c2) Vinylester, Vinylether, Vinylhalogenide, Vinylidenhalogenide, Vinylverbindungen mit aromatischen Cyclen und Heterocyclen in $\alpha$-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylnitril. In einer weiteren sehr bevorzugten Auslegung für die Monomere (c2) werden Monomere mit folgenden funktionellen Gruppen eingesetzt: Hydroxy-, Carboxy-, Epoxy-, Säureamid-, Isocyanato- oder Aminogruppen.

In einer vorteilhaften Variante werden für (c2) Acrylmonomere entsprechend der folgenden allgemeinen Formel eingesetzt,

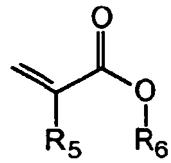

wobei $R_5$ H oder $CH_3$ darstellt und der Rest $-OR_6$ eine funktionelle Gruppe darstellt oder beinhaltet, welche eine nachfolgende UV-Vernetzung der Polyacrylathaftklebemasse unterstützt, welche z. B. in einer besonders bevorzugten Auslegung eine H-Donor Wirkung besitzt.

Besonders bevorzugte Beispiele für die Komponente (c2) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t-Butylphenylacrylat, t-Butylphenylmethacrylat, Phenoxyethylacrlylat, Phenoxyethylmethacrylat, 2-Butoxyethyl methacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Butoxymethyl)methacrylamid, N-Methylolacrylamid, N-(Ethoxymethyl)acrylamid, N-Isopropylacrylamid, Vinylessigsäure, Tetrahydrofutfurylacrylat, β-Acryloyloxypropionsäure, Trichloracrylsäure, Fumarsäure, Crotonsäure, Aconitsäure, Dimethylacrylsäure, wobei diese Aufzählung nicht abschließend ist.

Herstellung der Polyacrylathaftklebemassen

Zur Herstellung der Polyacrylathaftklebemassen der Schichten A und B werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben-Weyl, Methoden der Organischen Chemie, Vol. E 19a, S. 60-147 beschrieben. Diese Methoden werden in bevorzugter Weise in Analogie angewendet.

Beispiele für Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat und Benzpinacol. In einer sehr bevorzugten Auslegung wird als radikalischer Initiator 1,1'-Azo-bis-(cyclohexancarbonsäurenitril) (Vazo 88™ der Fa. DuPont) verwendet.

Die mittleren Molekulargewichte $M_n$ der bei der radikalischen Polymerisation entstehenden Polyacrylathaftklebemassen werden sehr bevorzugt derart gewählt, dass sie in einem Bereich von 20.000 bis 2.000.000 g/mol liegen; speziell für die weitere Verwendung als Schmelzhaftkleber werden Haftklebemassen mit mittleren Molekulargewichten $M_n$ von 100.000 bis 500.000 g/mol hergestellt. Die Bestimmung des mittleren Molekulargewichtes erfolgt über Größenausschlußchromatographie (SEC) oder Matrixunterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z. B. Hexan, Heptan, Octan, Isooctan), aromatische Kohlenwasserstoffe (z. B. Benzol, Toluol, Xylol), Ester (z. B. Essigsäureethylester, Essigsäurepropyl-, -butyl- oder -hexylester), halogenierte Kohlenwasserstoffe (z. B. Chlorbenzol), Alkanole (z. B. Methanol, Ethanol, Ethylenglycol, Ethylenglycolmonomethylether) und Ether (z. B. Diethylether, Dibutylether) oder Gemische davon. Die wässerigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell.

Die Polymerisation kann für die thermisch zerfallenden Initiatoren durch Erwärmen auf 50 bis 160 °C, je nach Initiatortyp, initiiert werden.

Zur Radikalstabilisierung werden in günstiger Vorgehensweise Nitroxide des Typs (NIT 1) oder (NIT 2) eingesetzt:

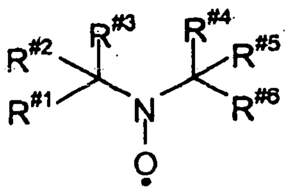

(NIT 1)

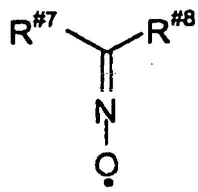

(NIT 2)

wobei $R^{\#1}$, $R^{\#2}$, $R^{\#3}$, $R^{\#4}$, $R^{\#5}$, $R^{\#6}$, $R^{\#7}$, $R^{\#8}$ unabhängig voneinander folgende Verbindungen oder Atome bedeuten:

i) Halogenide, wie z. B. Chlor, Brom oder Iod;
ii) lineare, verzweigte, cyclische und heterocyclische Kohlenwasserstoffe mit 1 bis 20 Kohlenstoffatomen, die gesättigt, ungesättigt oder aromatisch sein können;
iii) Ester $-COOR^{\#9}$ , Alkoxide $-OR^{\#10}$ und/oder Phosphonate $-PO(OR^{\#11})_2$, wobei $R^{\#9}$, $R^{\#10}$ und/oder $R^{\#11}$ für Reste aus der Gruppe ii) stehen.

Verbindungen der Struktur (NIT 1) oder (NIT 2) können auch an Polymerketten jeglicher Art gebunden sein (vorrangig in dem Sinne, dass zumindest einer der oben genannten Reste eine derartige Polymerkette darstellt) und somit zum Aufbau der Blockcopolymere als Makroradikale oder Makroregler genutzt werden.

Stärker bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methylpropylnitroxid
- N-tert.-Butyl-1-(2-naphtyl)-2-methylpropylnitroxid
- N-tert.-Butyl-1-diethylphosphono-2,2-dimethylpropylnitroxid
- N-tert.-Butyl-1-dibenzylphosphono-2,2-dimethylpropylnitroxid
- N-(1-Phenyl-2-methyl propyl)-1-diethylphosphono-1-methylethylnitroxid
- Di-t-Butylnitroxid
- Diphenylnitroxid
- t-Butyl-t-amylnitroxid.

Eine Reihe weiterer Polymerisationsmethoden, nach denen die Polymere in alternativer Vorgehensweise hergestellt werden können, lassen sich aus dem Stand der Technik wählen:

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im Allgemeinen geringe Umsätze auf. Besonders problematisch ist die Polymerisation von Acrylaten, die nur zu sehr geringen Ausbeuten und Molmassen abläuft.

WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle

Nitroxyle, die auf Morpholinen, Piperazinonen und Piperazindionen basieren. DE 199 49 352 A1 beschreibt heterocyclische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode lässt sich in vorteilhafter Weise zur Synthese der Polymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; der EP 826 698 A1; EP 824 110 A1; EP 841 346 A1; EP 850 957 A1) eingesetzt werden. Die unterschiedlichen Möglichkeiten der ATRP sind ferner in US 5,945,491 A, US 5,854,364 A und US 5,789,487 A beschrieben.

Weiterhin vorteilhaft kann das erfindungsgemäß genutzte Polymer über eine anionische Polymerisation hergestellt werden. Hier werden als Reaktionsmedium bevorzugt inerte Lösungsmittel verwendet, wie z. B. aliphatische und cycloaliphatische Kohlenwasserstoffe, oder auch aromatische Kohlenwasserstoffe.

Das lebende Polymer wird im Allgemeinen durch die Struktur $P_L(A)$-Me repräsentiert, wobei Me ein Metall der Gruppe I des Periodensystems, wie z. B. Lithium, Natrium oder Kalium, und $P_L(A)$ ein wachsender Polymerblock aus den Monomeren A ist. Die Molmasse des herzustellenden Polymers wird durch das Verhältnis von Initiatorkonzentration zu Monomerkonzentration vorgegeben.

Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z. B. n-Butylacrylat und 2-Ethylhexylacrylat, direkt polymerisiert werden können und nicht im Polymer durch eine Umesterung mit dem entsprechenden Alkohol generiert werden müssen.

Als sehr bevorzugter Herstellprozess wird eine Variante der RAFT-Polymerisation (reversible addition-fragmentation chain transfer polymerization) durchgeführt. Der Polymerisationsprozess ist z. B. in WO 98/01478 A1 und WO 99/31144 A1 ausführlich beschrieben. Zur Herstellung eignen sich besonders vorteilhaft Trithiocarbonate der allgemeinen Struktur R'''-S-C(S)-S-R''' (Macromolecules 2000, 33, 243-245).

In einer sehr vorteilhaften Variante werden beispielsweise die Trithiocarbonate (TTC1) und (TTC2) oder die Thioverbindungen (THI1) und (THI2) zur Polymerisation eingesetzt, wobei $\phi$ ein Phenylring, der unfunktionalisiert oder durch Alkyl- oder Arylsubstituenten, die direkt oder über Ester- oder Etherbrücken verknüpft sind, funktionalisiert sein kann, oder eine Cyanogruppe oder ein gesättigter oder ungesättgter aliphatischer Rest sein kann. Der Phenylring $\phi$ kann optional einen oder mehrere Polymerblöcke, beispielsweise Polybutadien, Polyisopren, Polychloropren oder Poly (meth)acrylat, das entsprechend der Definition für P(A) oder P(B) aufgebaut sein kann, oder Polystyrol tragen, um nur einige zu nennen. Funktionalisierungen können beispielsweise Halogene, Hydroxygruppen, Epoxidgruppen, stickstoff oder schwefelenthaltende Gruppen sein, ohne dass diese Liste Anspruch auf Vollständigkeit erhebt.

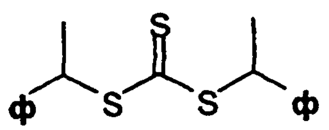

(TTC 1)

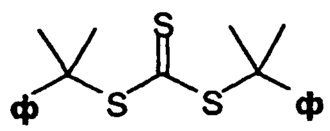

(TTC 2)

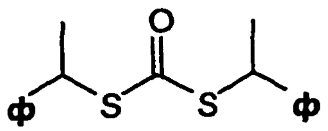

(THI 1)

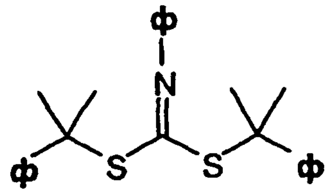

(THI 2)

Außerdem können Thioester der allgemeinen Struktur

$R^{\$1}$-C(S)-S-$R^{\$2}$ (THE)

zum Einsatz kommen, insbesondere, um asymmetrische Systeme herzustellen. Dabei können $R^{\$1}$ und $R^{\$2}$ unabhängig voneinander gewählt werden, und $R^{\$1}$ kann ein Rest aus einer der folgenden Gruppen i) bis iv) und $R^{\$2}$ ein Rest aus einer der folgenden Gruppen i) bis iii) sein:

i) $C_1$- bis $C_{18}$-Alkyl, $C_2$- bis $C_{18}$-Alkenyl, $C_2$- bis $C_{18}$-Alkinyl, jeweils linear oder verzweigt; Aryl-, Phenyl-, Benzyl-, aliphatische und aromatische Heterozyklen.

ii) -$NH_2$, -NH-$R^{\$3}$, -$NR^{\$3}R^{\$4}$, -NH-C(O)-$R^{\$3}$, -$NR^{\$3}$-C(O)-$R^{\$4}$, -NH-C(S)-$R^{\$3}$, -$NR^{\$3}$-C(S)-$R^{\$4}$,

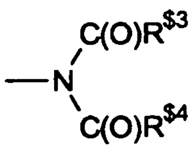 , 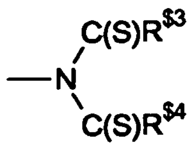 , 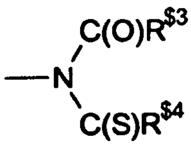

wobei $R^{\$3}$ und $R^{\$4}$ unabhängig voneinander gewählte Reste aus der Gruppe i) sind.

iii) -S-$R^{\$5}$, -S-C(S)-$R^{\$5}$, wobei $R^{\$5}$ ein Rest aus einer der Gruppen i) oder ii) sein kann.

iv) -O-$R^{\$6}$, -O-C(O)$R^{\$6}$, wobei $R^{\$6}$ ein Rest aus einer der Gruppen i) oder ii) sein kann.

In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo- oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seinen hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat, Benzpinacol. In einer sehr bevorzugten Variante wird als radikalischer Initiator 1,1'-Azo-bis-(cyclohexylnitril) (Vazo 88®, DuPont®) oder 2,2-Azo-bis-(2-methylbutannitril) (Vazo 67®, DuPont®) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflusst, die Restmonomere im Aufkonzentrationsprozess das Lösemittelrecyclat verunreinigen und die entsprechenden Haftklebebänder ein sehr hohes Ausgasungsverhalten zeigen würden.

Zur vorteilhaften Weiterentwicklung können den Polyacryathaftklebemassen der Schicht A und B Harze beigemischt werden. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Für die unpolare Schicht werden dementsprechend bevorzugt unpolare, wie z. B. C5- und C9-KW-Harze eingesetzt. Für die polare Haftklebemassenschicht werden dagegen bevorzugt polarere Harze, wie Terpenphenolharze oder Kolophoniumharze eingesetzt. Eine Kategorisierung in polare und unpolare Harze kann durch den Clouding-Point vorgenommen werden.

Auf die Darstellung des Wissensstandes im Handbook of Pressure Sensitive Adhesive Technology" von Donatas Satas (van Nostrand, 1989) sei ausdrücklich hingewiesen.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.

Bevorzugt wird die innere Festigkeit (Kohäsion) der Haftklebemasse durch eine Vernetzung gesteigert. Hierzu können den acrylathaltigen Haftklebemassen optional verträgliche Vernetzersubstanzen zugesetzt werden. Als Vernetzer eignen sich z. B. Metallchelate, multifunktionelle Isocyanate, multifunktionelle Amine oder multifunktionelle Alkohole. Auch multifunktionelle Acrylate lassen sich vorteilhaft als Vernetzer für eine actinische Bestrahlung verwenden.

Herstellung der zweischichtigen Haftklebemasse

Die Haftklebemasse der Schicht A kann aus Lösung auf die Haftkiebemasse der Schicht B oder vice versa aufgetragen werden. In einer bevorzugten Auslegung werden die Haftklebemassen A oder B aus der Schmelze beschichtet.

Für die Beschichtung aus Lösung werden bevorzugt Lösemittel eingesetzt, die zu beschichtenden Haftklebemassenschicht A oder B nicht auflösen. Für den Auftrag aus der Schmelze wird das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

In einem weiteren sehr bevorzugten Verfahren werden die Schichten A und B im Coextrusionsverfahren gleichzeitig mit einer Coextrusionsdüse zusammengeführt.

Nach der Beschichtung werden die Polyacrylathaftklebemassen vorzugsweise vernetzt. Die Vernetzung kann separat vor der Zusammenkaschierung oder in einem Schritt durch den Verbund geschehen. Letzteres ist im erfindungsgemäßen Sinne zu bevorzugen, da auf diesem Wege höhere Verbundfestigkeiten erzielt werden.

Zur optionalen Vernetzung mit UV-Licht werden den acrylathaltigen Haftklebemassen UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenonreste, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann auf Carroy et al. in "Chemistry and Technology of UV and EB Formulation for Coatings, Inks and Paints", Oldring (Hrsg.), 1994, SITA, London, verweisen werden.

Prinzipiell ist es auch möglich, die Polyacrylathaftklebemassen mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Weiterhin betrifft die Erfindung die Verwendung der beschriebenen erfindungsgemäßen zweiseitigen Haftklebemasse für Haftklebebänder.

Beispiele

Die Erfindung wird im folgenden durch Beispiele näher erläutert, ohne sich durch die Wahl der Beispiele unnötig beschränken zu wollen.

Folgende Testmethoden wurden angewendet, um die klebtechnischen Eigenschaften der hergestellten Haftklebemassen zu evaluieren.

Testmethoden

180°-Klebkrafttest (Test A)

Ein 20 mm breiter Streifen einer auf silikonisiertes Trennpapier beschichteten Haftklebemasse wurde auf eine 25 µm dicke, mit einem Saran Primer versehende PET-Folie umlaminiert und anschließend dieses Haftklebebandmuster auf eine PE-Platte und eine Stahlplatte aufgebracht. Der Haftklebestreifen wurde zweimal mit einem 2 kg-Gewicht auf das Substrat aufgedrückt. In Anlehnung an PSTC-1 wurde das Klebeband anschließend sofort mit einer Geschwindigkeit von 300 mm/min und im 180°-Winkel mittels einer Zugprüfmaschine (z. B. Fa. Zwick) vom Substrat abgezogen.

Die Messergebnisse sind in N/cm angegeben und aus drei Messungen gemittelt. Alle Messungen wurden bei Raumtemperatur unter klimatisierten Bedingungen durchgeführt.

Oberflächenenergie (Test B)

In Anlehnung an DIN 53364 wurde die Oberflächenenergie der Trägermaterialien mit Testtinten bestimmt.

Mit einem Pinsel oder einem besonderen Aufziehgerät wird eine Serie bekannter Flüssigkeiten (Testtinte DIN 53364, Ahlbrandt System GmbH) in der Reihenfolge ihrer Oberflächenspannungen auf den zu untersuchenden Untergrund aufgebracht. Wenn eine Flüssigkeit nicht mehr benetzt, d. h. sich innerhalb von 2 Sekunden zu einzelnen Tropfen zusammenzieht, dann entspricht die "Oberflächenenergie" der zu prüfenden Oberfläche derjenigen, der zuvorletzt verwendeten Testtinte. Die Werte werden in mN/m angebeben.

Herstellung der unpolaren Polyacrylate (Schicht A)

Polyacrylat1:

Ein für radikalische Polymerisationen konventioneller 2-L-Glasreaktor wurde mit 8 g Acrylsäure, 272 g 2-Ethylhexylacrylat, 120 g Isobornylacrylat und 266 g
Aceton : Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont), gelöst in 10 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN, gelöst in 10 g Aceton, hinzugegeben. Nach 5 Stunden Reaktionszeit wurden 0,8 g Bis-(4-tert.-butylcyclohexanyl)-peroxy-dicarbonat (Perkadox 16™, Fa Akzo Nobel), gelöst in 10 g Aceton, hinzugegeben. Nach 6 Stunden wurde mit 100 g Siedegrenzenbenzin 60/95 verdünnt. Nach 7 Stunden Reaktionszeit wurden 0,8 g Bis-(4-tert.-butylcyclohexanyl)-peroxy-dicarbonat (Perkadox 16™, Fa Akzo Nobel), gelöst in 10 g Aceton, hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0,6 Gew.-% Aluminium-(IIII)-acetylacetonat (3%ige Lösung in Aceton) abgemischt, auf einen Feststoffgehalt von 30 % mit Siedegrenzenbenzin 60/95 verdünnt und dann aus Lösung auf ein silikonisiertes Trennpapier beschichtet. Nach Trocknung für 30 Minuten bei 120 °C betrug der Masseauftrag 50 g/m$^2$. Zur Bestimmung der Oberflächenenergie wurde Testmethode B durchgeführt.

Polyacrylat 2:

Ein für radikalische Polymerisationen konventioneller 2-L-Glasreaktor wurde mit 8 g Acrylsäure, 312 g 2-Ethylhexylacrylat, 80 g Isobornylacrylat und 266 g
Aceton : Siedegrenzenbenzin 60/95 (1 : 1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0,8 g Bis-(4-tert.-butylcyclohexanyl)-peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt.

Nach 7 Stunden Reaktionszeit wurden 0,8 g Bis-(4-tert.-butylcyclohexanyl)-peroxy-dicarbonat (Perkadox 16™, Fa Akzo Nobel), gelöst in 10 g Aceton, hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0,6 Gew.-% Aluminium-(IIII)-acetylacetonat (3%ige Lösung in Aceton) abgemischt, auf einen Feststoffgehalt von 30 % mit Siedegrenzenbenzin 60/95 verdünnt und dann aus Lösung auf ein silikonisiertes Trennpapier beschichtet. Nach Trocknung für 30 Minuten bei 120 °C betrug der Masseauftrag 50 g/m$^2$. Zur Bestimmung der Oberflächenenergie wurde Testmethode B durchgeführt.

Herstellung der polaren Polyacrylate (Schicht B)

Polyacrylat 3:

Ein für radikalische Polymerisationen konventioneller 2-L-Glasreaktor wurde mit 40 g Acrylsäure, 300 g 2-Ethylhexylacrylat, 60 g Methylacrylat und 133 g Aceton/Isopropanol (96 : 4) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g eines Gemisches aus AcetorIllsopropanol (96 : 4) verdünnt. Zur Reduktion der Restinitiatoren wurden nach 8 und nach 10 h jeweils 0,6 g Bis-(4-tert.-butylcyclohexanyl)-peroxy-dicarbonat (Perkadox 16™, Fa. Akzo Nobel) hinzugegeben. Die Reaktion wurde nach 24 h Reaktionszeit abgebrochen und auf Raumtemperatur abgekühlt.

Anschließend wurde das Polymer im Vakuum (1 Torr) und unter Wärme (95 °C) vom Lösemittel befreit und bei 160 °C mit einer GID-Schmelzdüse auf die unpolare Haftklebemasse (Polyacrylat 1 oder 2) beschichtet. Zur besseren Verankerung wurde mit elektrostatischer Aufladung aufgelegt. Hierfür wurden Eltex-Aufladestäbe eingesetzt.

Zur Vernetzung wurde das so erhaltene Polymer mit Elektronen bestrahlt, wobei ein Gerät der Fa. Electron Crosslinking AB, Halmstad, Schweden, verwendet wurde. Der Haftklebemassenverbund wurde dabei über eine standardmäßig vorhandene Kühlwalze unter dem Lenard-Fenster des Beschleunigers hindurchgeführt. Dabei wurde in der Bestrahlungszone der Luftsauerstoff durch Spülen mit reinem Stickstoff verdrängt. Die Bahngeschwindigkeit betrug jeweils 10 m/min. Es wurde mit 40 kGray und 200 kV Beschleunigungsspannung bestrahlt. Zur Bestimmung der Oberflächenenergie wurde Testmethode B durchgeführt.

Polyacrylat 4:

Ein für radikalische Polymerisationen konventioneller 2-L-Glasreaktor wurde mit 28 g Acrylsäure, 80 g Methylacrylat, 292 g 2-Ethylhexylacrylat und 200 g Aceton/Isopropanol (95 : 5) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton/lsopropanol (95 : 5) Gemisch verdünnt. Zur Reduktion der Restinitiatoren wurden nach 8 und nach 10 h jeweils 0,6 g Bis-(4-tert.-butylcyclohexanyl)-peroxy-dicarbonat (Perkadox 16™, Fa Akzo Nobel) hinzugegeben. Die Reaktion wurde nach 24 h Reaktionszeit abgebrochen und auf Raumtemperatur abgekühlt. Anschließend wurde das Polyacrylat in einem Vakuumtrockenschrank bei 1 Torr und 95 °C vom Lösemittel befreit und aus der Schmelze bei einer Temperatur von 160 °C in der Schmelzfahne mit einer GID-Schmelzdüse auf die unpolare Haftklebemasse (Polyacrylat 1 oder 2) beschichtet. Zur besseren Verankerung wurde mit elektrostatischer Aufladung aufgelegt. Hierfür wurden Eltex-Aufladestäbe eingesetzt.

Zur Vernetzung wurde das so erhaltene Polymer mit Elektronen bestrahlt, wobei ein Gerät der Fa. Electron Crosslinking AB, Halmstad, Schweden, verwendet wurde. Der Haftklebemassenverbund wurde dabei über eine standardmäßig vorhandene Kühlwalze unter dem Lenard-Fenster des Beschleunigers hindurchgeführt. Dabei wurde in der Bestrahlungszone der Luftsauerstoff durch Spülen mit reinem Stickstoff verdrängt. Die Bahngeschwindigkeit betrug jeweils 10 m/min. Es wurde mit 40 kGray und 200 kV Beschleunigungsspannung bestrahlt. Zur Bestimmung der Oberflächenenergie wurde Testmethode B durchgeführt.

Nachfolgend sind die erfindungsgemäß zweischichtigen Haftklebemassen beschrieben. Die Angabe "50 g/m$^2$" bezieht sich auf das Flächengewicht der jeweiligen Polymere. Das Herstellverfahren ist in der Beschreibung (Polyacrylat 3 und Polyacrylat 4) mit enthalten.

Beispiel 1

Schicht A: Polyacrylat 1 (50 $g/m^2$)
Schicht B: Polyacrylat 3 (50 $g/m^2$)

Beispiel 2

Schicht A: Polyacrylat 1 (50 $g/m^2$)
Schicht B: Polyacrylat 4 (50 $g/m^2$)

Beispiel 3

Schicht A: Polyacrylat 2 (50 $g/m^2$)
Schicht B: Polyacrylat 3 (50 $g/m^2$)

Beispiel 4

Schicht A: Polyacrylat 2 (50 $g/m^2$)
Schicht B: Polyacrylat 4 (50 $g/m^2$)

Ergebnisse

Zur Bestimmung der Oberflächenenergie wurde zunächst Testmethode B mit allen vier Polyacrylaten durchgeführt. Die Ergebnisse sind in Tabelle 1 zusammengefasst.

Tabelle 1

| | Oberflächenenergie in mN/m |
|---|---|
| Polyacrylat 1 | 46 |
| Polyacrylat 2 | 48 |
| Polyacrylat 3 | 58 |
| Polyacrylat 4 | 60 |

Tabelle 1 ist zu entnehmen, dass die unpolaren Polyacrylate 1 und 2 eine deutlich geringere Oberflächenenergie besitzen.
Für die weitere Verwendung der erfindungsgemäßen Haftklebemassen wurden die vier beispielhaften Haftklebemassen auf PE und Stahl verklebt und die Klebkräfte auf den unterschiedlichen Oberflächen gemessen. Die Ergebnisse sind in Tabelle 2 angegeben. Der Ausdruck "Schicht A verklebt" ist so zu verstehen, dass die Schicht A mit PE bzw.
Stahl verklebt wurde. Der Ausdruck "Schicht B verklebt" ist so zu verstehen, dass die Schicht B mit PE bzw. Stahl verklebt wurde.

Tabelle 2

| | Test A KK-Stahl in N/cm Schicht A verklebt | Test A KK-Stahl in N/cm Schicht B verklebt | Test A KK-PE in N/cm Schicht A verklebt | Test A KK-PE in N/cm Schicht B verklebt |
|---|---|---|---|---|
| Beispiel 1 | 5,2 | 4,3 | 1,4 | 0,6 |
| Beispiel 2 | 5,3 | 4,3 | 1,5 | 0,7 |
| Beispiel 3 | 5,5 | 5,1 | 2,5 | 0,6 |

(fortgesetzt)

| Tabelle 2 | | | | |
|---|---|---|---|---|
| | Test A<br>KK-Stahl in N/cm Schicht A verklebt | Test A<br>KK-Stahl in N/cm Schicht B verklebt | Test A<br>KK-PE in N/cm Schicht A verklebt | Test A<br>KK-PE in N/cm Schicht B verklebt |
| Beispiel 4 | 5,8 | 5,4 | 2,2 | 0,8 |
| KK: Klebkraft | | | | |

Tabelle 2 ist zu entnehmen, dass mit der erfindungsgemäßen zweischichtigen Haftklebemasse sehr unterschiedliche Haftklebkräfte auf unterschiedlichen Untergründen generiert werden.

Liste der verwendeten Bezugszeichen

1 unpolare Schicht (Schicht A)
2 polare Schicht (Schicht (B)

## Patentansprüche

1. Zweischichtige Haftklebemasse, umfassend eine unpolare Schicht und eine polare Schicht, wobei
die unpolare Schicht und die polare Schicht jeweils eine Polyacrylathaftklebemasse mit einer statischen Glasübergangstemperatur von höchstens + 15 °C umfassen und wobei
sich die Oberflächenenergie der unpolaren Schicht von der Oberflächeenergie der polaren Schicht um zumindest 5 mN/m unterscheidet.

2. Zweischichtige Haftklebemasse nach Anspruch 1, **dadurch gekennzeichnet, dass** die Polyacrylathaftklebemasse der unpolaren Schicht ein Polymer aus einer ersten Monomermischung umfasst, die in Bezug auf die erste Monomermischung

   (a1) 58 bis 90 Gew.-% Acrylsäureester und/oder Methacrylsäureester der Formel $CH_2=C(R_1)(COOR_2)$, wobei $R_1$ H oder $CH_3$ darstellt und $R_2$ einen linearen oder verzweigten Alkylrest mit 1 bis 10 Kohlenstoffatomen darstellt;
   (b1) 10 bis 40 Gew.-% Acrylsäureester und/oder Methacrylsäureester der Formel $CH_2=C(R_{1a})(COOR_{2a})$, wobei $R_{1a}$ H oder $CH_3$ darstellt und $R_{2a}$ einen linearen, cyclischen oder verzweigten Alkylrest mit 11 bis 30 Kohlenstoffatomen darstellt;
   (c1) 0 bis 2 Gew-% Acrylsäure oder Methacrylsäure und
   (d1) 0 bis 10 Gew.-% einer Vinylverbindung mit einer zur Vernetzung befähigten Gruppe, wobei die Vinylverbindung keine freien Carbonsäuregruppen oder Hydroxygruppen enthält;

   umfasst, und dass die Polyacrylathaftklebemasse der polaren Schicht ein Polymer aus einer zweiten Monomermischung umfasst, die in Bezug auf die zweite Monomermischung

   (a2) 58 bis 97 Gew.-% Acrylsäureester und/oder Methacrylsäureester mit der Formel $CH_2=C(R_3)(COOR_4)$, wobei $R_3$ H und/oder $CH_3$ darstellt und $R_4$ H und/oder Alkylketten mit 1 bis 10 Kohlenstoffatomen darstellt;
   (b2) 3 bis 12 Gew-% Acrylsäure oder Methacrylsäure; und
   (c2) 0 bis 30 Gew.-% einer Vinylverbindung mit einer zur Vernetzung befähigten Gruppe;

   umfasst.

3. Zweischichtige Haftklebemasse nach Anspruch 1 oder Anspruch 2, **dadurch gekennzeichnet, dass** Komponente (a1) ein Acryl- und Methacrylsäureester mit einer Alkylgruppe, die 4 bis 9 Kohlenstoffatome umfasst, ist.

4. Zweischichtige Haftklebemasse nach einem der vorstehenden Ansprüche, **dadurch gekennzeichnet, dass** Komponente (d1) eine aromatische Vinylverbindung ist, deren aromatischer Kern 4 bis 18 Kohlenstoffatome umfasst.

5. Zweischichtige Haftklebemasse nach einem der vorstehenden Ansprüche, **dadurch gekennzeichnet, dass** Komponente (a2) ein Acryl- und Methacrylsäureester mit einer Alkylgruppe, d:e 4 bis 9 Kohlenstoffatome umfasst, ist.

6. Zweischichtige Haftklebemasse nach einem der vorstehenden Ansprüche, **dadurch gekennzeichnet, dass** Komponente (c2) eine Verbindung der Formel

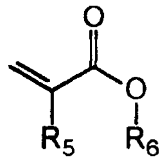

ist, wobei $R_5$ H oder $CH_3$ darstellt und der Rest $-OR_6$ eine funktionelle Gruppe darstellt oder beinhaltet, die eine UV-Vernetzung der Polyacrylathaftklebemasse unterstützt.

7. Verfahren zur Herstellung einer zweischichtigen Haftklebemasse nach einem der Ansprüche 1 bis 6, wobei die Polyacrylathaftklebemasse der unpolaren Schicht aus Lösung auf die Polyacrylathaftklebemasse der polaren Schicht aufgetragen wird.

8. Verfahren zur Herstellung einer zweischichtigen Haftklebemasse nach einem der Ansprüche 1 bis 6, wobei die Polyacrylathaftklebemasse der polaren Schicht aus Lösung auf die Polyacrylathaftklebemasse der unpolaren Schicht aufgetragen wird.

9. Verfahren zur Herstellung einer zweischichtigen Haftklebemasse nach einem der Ansprüche 1 bis 6, wobei die Polyacrylathaftklebemasse der polaren Schicht und die Polyacrylathaftklebemasse der unpolaren Schicht während eines Coextrusionsverfahrens zusammengeführt werden.

10. Verwendung einer zweischichtigen Haftklebemasse nach einem der Ansprüche 1 bis 6 als Haftklebeband.

## Claims

1. Bilayer pressure-sensitive adhesive comprising an apolar layer and a polar layer,
the apolar layer and the polar layer each comprising a polyacrylate pressure-sensitive adhesive having a static glass transition temperature of not more than +15°C, and
the surface energy of the apolar layer differing from the surface energy of the polar layer by at least 5 mN/m.

2. Bilayer pressure-sensitive adhesive according to Claim 1, **characterized in that** the polyacrylate pressure-sensitive adhesive of the apolar layer comprises a polymer formed from a first monomer mixture and comprising in respect of the first monomer mixture

(a1) from 58 to 90% by weight of acrylic and/or methacrylic esters of the formula $CH_2=C(R_1)(COOR_2)$ where $R_1$ is H or $CH_3$ and $R_2$ is a linear or branched alkyl radical having 1 to 10 carbon atoms;
(b1) from 10 to 40% by weight of acrylic and/or methacrylic esters of the formula $CH_2=C(R_{1a})(COOR_{2a})$ where $R_{1a}$ is H or $CH_3$ and $R_{2a}$ is a linear, cyclic or branched alkyl radical having 11 to 30 carbon atoms;
(c1) from 0 to 2% by weight of acrylic or methacrylic acid; and
(d1) from 0 to 10% by weight of a vinyl compound having a group capable of crosslinking but containing no free carboxylic acid groups or hydroxyl groups;

and **in that** the polyacrylate pressure-sensitive adhesive of the polar layer comprises a polymer formed from a second monomer mixture comprising in respect of the second monomer mixture

(a2) from 58 to 97% by weight of acrylic and/or methacrylic esters with the formula $CH_2=C(R_3)(COOR_4)$ where $R_3$ is H and/or $CH_3$ and $R_4$ represents H and/or alkyl chains having 1 to 10 carbon atoms;
(b2) from 3 to 12% by weight of acrylic acid or methacrylic acid; and
(c2) from 0 to 30% by weight of a vinyl compound containing a group capable of crosslinking.

**3.** Bilayer pressure-sensitive adhesive according to Claim 1 or Claim 2, **characterized in that** component (a1) is an acrylic or methacrylic ester having an alkyl group containing 4 to 9 carbon atoms.

**4.** Bilayer pressure-sensitive adhesive according to any one of the above claims, **characterized in that** component (d1) is an aromatic vinyl compound whose aromatic nucleus contains 4 to 18 carbon atoms.

**5.** Bilayer pressure-sensitive adhesive according to any one of the above claims, **characterized in that** component (a2) is an acrylic or methacrylic ester having an alkyl group containing 4 to 9 carbon atoms.

**6.** Bilayer pressure-sensitive adhesive according to any one of the above claims, **characterized in that** component (c2) is a compound of the formula

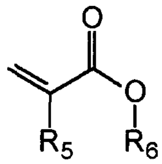

where $R_5$ is H or $CH_3$ and the radical $-OR_6$ is or comprises a functional group which supports UV crosslinking of the polyacrylate pressure-sensitive adhesive.

**7.** Process for preparing a bilayer pressure-sensitive adhesive according to any one of Claims 1 to 6, wherein the polyacrylate pressure-sensitive adhesive of the apolar layer is applied from solution to the polyacrylate pressure-sensitive adhesive of the polar layer.

**8.** Process for preparing a bilayer pressure-sensitive adhesive according to any one of Claims 1 to 6, wherein the polyacrylate pressure-sensitive adhesive of the polar layer is applied from solution to the polyacrylate pressure-sensitive adhesive of the apolar layer.

**9.** Process for preparing a bilayer pressure-sensitive adhesive according to any one of Claims 1 to 6, wherein the polyacrylate pressure-sensitive adhesive of the polar layer and the polyacrylate pressure-sensitive adhesive of the apolar layer are brought together during a coextrusion process.

**10.** Use of a bilayer pressure-sensitive adhesive according to any one of Claims 1 to 6 as pressure-sensitive adhesive tape.

## Revendications

**1.** Masse auto-adhésive à deux couches, comprenant une couche non polaire et une couche polaire
la couche non polaire et la couche polaire comprenant à chaque fois une masse auto-adhésive à base de polyacrylate avec une température de transition vitreuse statique d'au maximum +15°C et
l'énergie superficielle de la couche non polaire se distinguant de l'énergie superficielle de la couche polaire d'au moins 5 mN/m.

**2.** Masse auto-adhésive à deux couches selon la revendication 1, **caractérisée en ce que** la masse auto-adhésive à base de polyacrylate de la couche non polaire comprend un polymère d'un premier mélange de monomères, qui comprend, par rapport au premier mélange de polymères

(a1) 58 à 90% en poids d'ester d'acide acrylique et/ou d'ester d'acide méthacrylique de formule $CH_2=C(R_1)(COOR_2)$, où $R_1$ représente H ou $CH_3$ et $R_2$ représente un radical alkyle linéaire ou ramifié comprenant 1 à 10 atomes de carbone ;
(b1) 10 à 40% en poids d'ester d'acide acrylique et/ou d'ester d'acide méthacrylique de formule $CH_2=C(R_{1a})(COOR_{2a})$, où $R_{1a}$ représente H ou $CH_3$ et $R_2$, représente un radical alkyle linéaire, cyclique ou ramifié comprenant 11 à 30 atomes de carbone ;
(c1) 0 à 2% en poids d'acide acrylique ou d'acide méthacrylique et
(d1) 0 à 10% en poids d'un composé de vinyle avec un groupe apte à la réticulation, le composé de vinyle ne

contenant pas de groupes acide carboxylique ou de groupe hydroxy libres

et **en ce que** la masse auto-adhésive à base de polyacrylate de la couche polaire comprend un polymère d'un deuxième mélange de monomères qui comprend par rapport au deuxième mélange de monomères

(a2) 58 à 97% en poids d'ester d'acide acrylique et/ou d'ester d'acide méthacrylique présentant la formule $CH_2$=C ($R_3$) ($COOR_9$), où $R_3$ représente H et/ou $CH_3$ et $R_4$ représente H et/ou des chaînes alkyle comprenant 1 à 10 atomes de carbone ;
(b2) 3 à 12% en poids d'acide acrylique ou d'acide méthacrylique ; et
(c2) 0 à 30% en poids d'un composé de vinyle avec un groupe apte à la réticulation.

3. Masse auto-adhésives à deux couches selon la revendication 1 ou la revendication 2, **caractérisée en ce que** le composant (a1) est un ester d'acide acrylique et méthacrylique avec un groupe alkyle qui comprend 4 à 9 atomes de carbone.

4. Masse auto-adhésive à deux couches selon l'une quelconque des revendications précédentes, **caractérisée en ce que** le composant (d1) est un composé de vinyle aromatique dont le noyau aromatique comprend 4 à 18 atomes de carbone.

5. Masse auto-adhésive à deux couches selon l'une quelconque des revendications précédentes, **caractérisée en ce que** le composant (a2) est un ester d'acide acrylique et méthacrylique avec un groupe alkyle qui comprend 4 à 9 atomes de carbone.

6. Masse auto-adhésive selon l'une quelconque des revendications précédentes, **caractérisée en ce que** le composant (c2) est un composé de formule

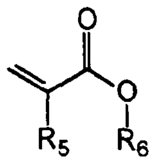

dans laquelle $R_5$ représente H ou $CH_3$ et le radical $-OR_6$ représente ou comporte un groupe fonctionnel, qui soutient une réticulation aux UV de la masse auto-adhésive à base de polyacrylate.

7. Procédé pour la préparation d'une masse auto-adhésive à deux couches selon l'une quelconque des revendications 1 à 6, la masse auto-adhésive à base de polyacrylate de la couche non polaire étant appliquée à partir d'une solution sur la masse auto-adhésive à base de polyacrylate de la couche polaire.

8. Procédé pour la préparation d'une masse auto-adhésive à deux couches selon l'une quelconque des revendications 1 à 6, la masse auto-adhésive à base de polyacrylate de la couche polaire étant appliquée à partir d'une solution sur la masse auto-adhésive à base de polyacrylate de la couche non polaire.

9. Procédé pour la préparation d'une masse auto-adhésive à deux couches selon l'une quelconque des revendications 1 à 6, la masse auto-adhésive à base de polyacrylate de la couche polaire et la masse auto-adhésive à base de polyacrylate de la couche non polaire étant assemblées pendant un procédé de coextrusion.

10. Utilisation d'une masse auto-adhésive à deux couches selon l'une quelconque des revendications 1 à 6 comme bande auto-adhésive.

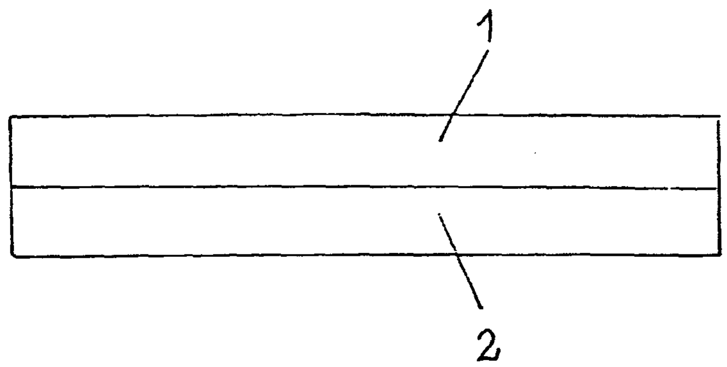


Fig. 1